# EUROPEAN PATENT APPLICATION

(11) **EP 4 730 846 A1**
(43) Date of publication of application: **22.04.2026**
(21) Application number: 24942063.9
(22) Date of filing: 27.12.2024
(51) Int. Cl.: H04W 4/06

(54) **TWO-WAY RADIO COMMUNICATION METHOD BASED ON BASE STATION RELAY, AND BASE STATION, TWO-WAY RADIO AND MEDIUM**

(71) Applicant: Shenzhen Ejeas Intelligent Technology Co., Ltd., Shenzhen, Guangdong 518000 (CN)
(72) Inventor: PENG, Lingli, Shenzhen, Guangdong 518000 (CN); WU, Cheng, Shenzhen, Guangdong 518000 (CN)
(74) Representative: Lin Chien, Mon-Yin
(86) International application number: PCT/CN2024/143309
(87) International publication number: WO 2025/251598

(57) **Abstract**

This application discloses a walkie-talkie communication method based on base station relay, a base station, a walkie-talkie, and a medium. The method includes: transmitting a time frame to a network node within a first communication range via a first voice communication channel to broadcast the network node corresponding to each voice time slot in the time frame through a synchronization time slot of the time frame; acquiring voice information transmitted by the network node and other base stations through the voice time slots of the received time frame; broadcasting the received voice information to the network node within the first communication range via the first voice communication channel, and broadcasting the received voice information to other base stations within a second communication range via a second voice communication channel.

## Description

### TECHNICAL FIELD

This application relates to the field of walkie-talkie communication technology, particularly to a walkie-talkie communication method based on base station relay, a base station, a walkie-talkie, and a medium.

### BACKGROUND

Walkie-talkies are typical half-duplex communication tools. In a work environment with multiple walkie-talkies, only one walkie-talkie can obtain the speaking right at a time, transmitting radio signals externally in a broadcast form, while other walkie-talkies only act as receivers. Thus, only after this walkie-talkie relinquishes the speaking right can another walkie-talkie begin to speak. That is, in a walkie-talkie network, full-duplex communication cannot be achieved, resulting in very limited usable communication resources and low call efficiency.

### SUMMARY

In view of the above, this application provides a walkie-talkie communication method based on base station relay, a base station, a walkie-talkie, and a medium, aiming to solve the technical problems of current walkie-talkies being unable to achieve full-duplex communication and having low communication efficiency.

In a first aspect, this application provides a walkie-talkie communication method based on base station relay, applied to a base station, including the following steps of: transmitting a time frame to a network node within a first communication range via a first voice communication channel to broadcast the network node corresponding to each voice time slot in the time frame through a synchronization time slot of the time frame, wherein the time frame comprises the synchronization time slot, a contention time slot and at least two voice time slots, with each walkie-talkie serving as a network node; receiving the time frame transmitted by the network node within the first communication range via the first voice communication channel, receiving the time frame transmitted by other base stations within a second communication range via a second voice communication channel, and acquiring voice information transmitted by the network node and other base stations through the voice time slots of the received time frame; and broadcasting the received voice information to the network node within the first communication range via the first voice communication channel, and broadcasting the received voice information to other base stations within the second communication range via the second voice communication channel, wherein the second communication range is larger than the first communication range.

Further, before the step of transmitting a time frame to a network node within a first communication range via a first voice communication channel, the method includes: receiving the time frame transmitted by network node within the first communication range via the first voice communication channel, and receiving a network entry request or a roaming request transmitted by the network node through the contention time slot of the received time frame; and adjusting a network topology based on the network entry request or the roaming request.

Further, before the step of transmitting a time frame to a network node within a first communication range via a first voice communication channel, the method includes: receiving the time frame transmitted by the network node within the first communication range via the first voice communication channel, and receiving a voice initiation request transmitted by the network node through the contention time slot of the received time frame; and allocating a corresponding network node to each voice time slot in the time frame based on the received voice initiation request.

Further, the steps of receiving the time frame transmitted by the network node within the first communication range via the first voice communication channel, and receiving the time frame transmitted by other base stations within a second communication range via a second voice communication channel include: respectively allocating the received voice information from each network node and other base stations to corresponding voice time slots; transmitting the time frame to the network node within the first communication range via the first voice communication channel, and transmitting the received voice information to the network node within the first communication range through the corresponding voice time slots in the time frame; and transmitting the time frame to other base stations within the second communication range via the second voice communication channel, and transmitting the received voice information to other base stations within the second communication range through the corresponding voice time slots in the time frame.

In a second aspect, this application provides a walkie-talkie communication method based on base station relay, applied to a walkie-talkie, including the following steps of: receiving a time frame transmitted by base stations within a first communication range via a first voice communication channel, to determine voice time slots allocated to itself through a synchronization time slot in the time frame, wherein the time frame comprises the synchronization time slot, a contention time slot and at least two voice time slots; and transmitting the time frame via the first voice communication channel, broadcasting voice information to be transmitted to other walkie-talkies or base stations within the first communication range through the voice time slots allocated to itself in the time frame, and broadcasting the voice information to be transmitted to other base stations within a second communication range via a second voice communication channel through a base station that receives the voice information, wherein the second communication range is larger than the first communication range.

Further, before the step of receiving a time frame transmitted by base stations within a first communication range via a first voice communication channel, the method includes: scanning a network signal quality of a currently connected base station and network signal qualities of other base stations, and comparing the network signal quality of the currently connected base station with those of other base stations; and when there exists a base station with a better network signal quality than the currently connected base station, transmitting the time frame to the base station with a better network signal quality via the first voice communication channel, and transmitting a network entry request or roaming request through the contention time slot in the time frame.

Further, before the step of receiving a time frame transmitted by base stations within a first communication range via a first voice communication channel, the method includes: transmitting the time frame to a base station within the first communication range via the first voice communication channel, and transmitting a voice initiation request through the contention time slot in the time frame; receiving the time frame returned by the base station in response to the voice initiation request, and confirming whether the voice initiation request was successfully sent based on the synchronization time slot in the time frame returned by the base station; and if the voice initiation request is not successfully transmitted, randomly waiting for several frame periods, then retransmitting the time frame to the base station within the first communication range via the first voice communication channel, and retransmitting the voice initiation request through the contention time slot in the time frame.

In a third aspect, this application provides a base station, including: a first short-range communication module for communicating with a network node within a first communication range via a first voice communication channel, wherein each walkie-talkie serves as a network node; a long-range communication module for communicating with other base stations within a second communication range via a second voice communication channel, wherein the second communication range is larger than the first communication range; and a first main control module for controlling the first short-range communication module and the long-range communication module to execute the walkie-talkie communication method based on base station relay according to any embodiment of the first aspect of this application.

In a fourth aspect, this application provides a walkie-talkie, including: a second short-range communication module for communicating with a base station within a first communication range via a first voice communication channel; and a second main control module for controlling the second short-range communication module to execute the walkie-talkie communication method based on base station relay according to any embodiment of the second aspect of this application.

In a fourth aspect, this application provides a computer-readable storage medium. The computer-readable storage medium stores computer instructions, which are used to cause a computer to execute the walkie-talkie communication method based on base station relay according to any embodiment of the first or the second aspect of this application.

Compared with the prior art, the present application mainly has the following beneficial effects:

According to the walkie-talkie communication method based on base station relay, the base station, the walkie-talkie, and the medium in this application, a time frame is transmitted to the network node within the first communication range via the first voice communication channel to broadcast the network node corresponding to each voice time slot in the time frame through the synchronization time slot of the time frame, and the time frame is transmitted by the network node within the first communication range via the first voice communication channel and the time frames are transmitted by other base stations within the second communication range via the second voice communication channel; the voice information transmitted by network nodes and other base stations is acquired through the voice time slots of the received time frame; the received voice information is then broadcast to other base stations via the second voice communication channel with a larger communication range, enabling at least two groups of walkie-talkies or base stations within the network to speak simultaneously in the same time period through time-division multiplexing, achieving duplex communication within the first and second communication ranges.

Meanwhile, the network topology in this application forms a mesh topology with one base station and multiple walkie-talkies. Different base stations communicate via the second voice communication channel, allowing low-latency communication without the need for sequential transmission through multiple network nodes, even over long distances.

The walkie-talkies in this application can automatically send network entry requests or roaming requests in real-time through the contention time slots in the time frames, flexibly adjusting the connected base stations. Each base station thereby updates the connected network nodes, allowing both walkie-talkies and base stations to move freely and achieve flexible, multilateral mobile networking.

### BRIEF DESCRIPTION OF DRAWINGS

To more clearly illustrate the specific implementations of the present application or the technical solutions in the prior art, the drawings required for describing the specific implementations or the prior art will be briefly introduced below. Obviously, the drawings in the following description are some implementations of the present application. For those of ordinary skill in the art, other drawings can also be obtained from these drawings without creative effort.
FIG. 1 is a schematic flowchart of the walkie-talkie communication method based on base station relay according to an embodiment of the present application;
FIG. 2 is a schematic flowchart of another walkie-talkie communication method based on base station relay according to an embodiment of the present application;
FIG. 3 is a network topology diagram of a base station and walkie-talkies according to an embodiment of the present application;
FIG. 4 is a schematic diagram of time slot design according to an embodiment of the present application;
FIG. 5 is a schematic diagram of voice time slot allocation according to an embodiment of the present application;
FIG. 6 is a structural block diagram of a base station according to an embodiment of the present application;
FIG. 7 is a structural block diagram of a walkie-talkie according to an embodiment of the present application.

### DESCRIPTION OF EMBODIMENTS

To make the objectives, technical solutions, and advantages of the embodiments of this application clearer, the technical solutions in the embodiments of this application will be described clearly and completely below with reference to the accompanying drawings in the embodiments of this application. Obviously, the described embodiments are part of the embodiments of this application, rather than all of them. Based on the embodiments in this application, all other embodiments obtained by those skilled in the art without creative efforts shall fall within the scope of protection of this application.

Currently, in walkie-talkie networks, full-duplex communication cannot be achieved, resulting in very limited available communication resources and low call efficiency.

In related technologies, one of multiple walkie-talkies is proposed to serve as the main coordinator, continuously transmitting time frames externally to disseminate network topology information through beacons in the time frames and allocate voice time slots to each walkie-talkie acting as a network node in the time-division multiplexed time frames, thereby achieving a full-duplex effect. However, in this solution, the network topology is chain-like, and the main coordinator and other walkie-talkies have the same communication range. When the communication range is large, voice information must be relayed through many network nodes to reach the target walkie-talkie, leading to significant message transmission delays and the inability to implement a mobile networking approach using small base station relays.

In view of this, the embodiments of this application provide a walkie-talkie communication method based on base station relay.

The walkie-talkie communication method based on base station relay provided by the embodiments of this application can be applied to base stations, specifically, mobile base stations that can be carried and freely moved.

In one example, the base station includes a first short-range communication module, a long-range communication module, and a first main control module.

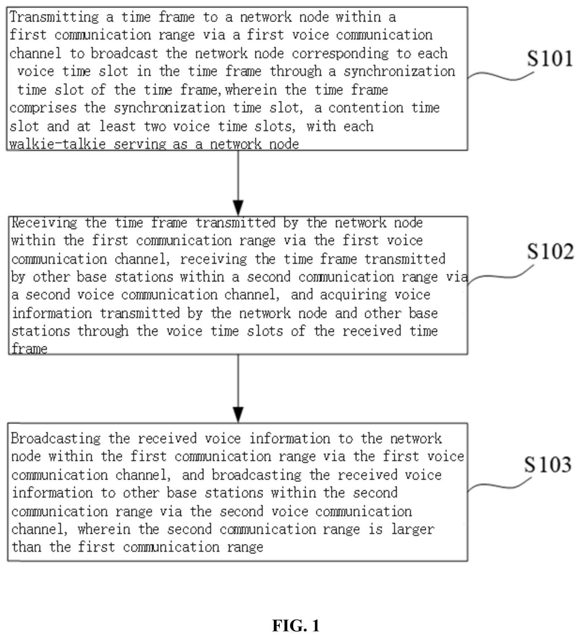

As shown in FIG. 1, the walkie-talkie communication method based on base station relay in the embodiments of this application includes the following steps:

Step S101: a time frames is transmitted to a network node within a first communication range via a first voice communication channel to broadcast the network node corresponding to each voice time slot in the time frame through a synchronization time slot of the time frame; the time frames include the synchronization time slot, a contention time slot and at least two voice time slots, with each walkie-talkie acting as a network node.

Step S102: the time frame transmitted by the network node within the first communication range is received via the first voice communication channel, the time frames transmitted by other base stations within the second communication range are received via the second voice communication channel, and voice information transmitted by the network nodes and other base stations is obtained through the voice time slots of the received time frame.

Step S103: the received voice information is broadcast to the network node within the first communication range via the first voice communication channel, and the received voice information is broadcast to other base stations within the second communication range via the second voice communication channel, where the second communication range is larger than the first communication range.

Specifically, the first voice communication channel is the communication channel between the base station and surrounding walkie-talkie devices. The full-duplex communication of the walkie-talkie network in this embodiment is achieved through time-division multiplexed time frames, where one time frame is the smallest communication unit in this method.

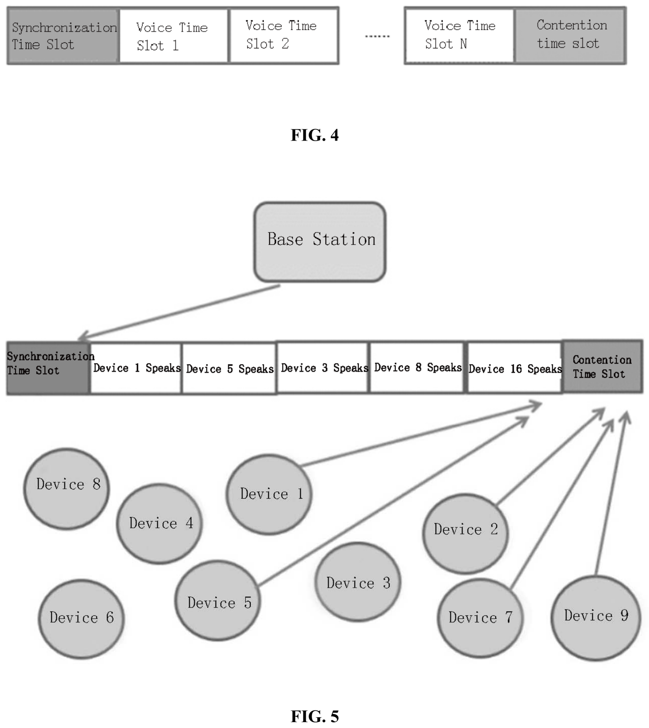

As shown in FIG. 4, the time frame of the first voice communication channel includes a synchronization time slot, a contention time slot and at least two voice time slots. Each time slot corresponds to a signal within a specific period of the time frame, enabling the transmission of relevant information based on the function of the time slot. This allows each network node in the network to share the link within the duration of one time frame.

During the synchronization time slot, the base station's first short-range communication module periodically broadcasts synchronization signaling. Nearby walkie-talkie devices can obtain relevant parameters of the base station based on this synchronization signaling.

There are several voice time slots, with voice time slot 1 to voice time slot N being reserved slots allocated by the base station for walkie-talkie devices to use for calls.

The contention time slot is used by walkie-talkie devices to send network access requests, voice initiation requests, or roaming requests to the base station. Competing for the right to speak during the contention time slot ensures that calls between network nodes do not interfere with each other.

The base station periodically sends time frames to the network nodes within the first communication range via the first voice communication channel, broadcasting the allocated voice time slots and base station information. Each network node broadcasts the voice information to be sent through its allocated voice time slots.

The time frame structure of the second voice communication channel is the same as that of the first voice communication channel, also including a synchronization time slot, a contention time slot and at least two voice time slots.

The second voice communication channel is for inter-base station communication, with a communication range larger than that of the first voice communication channel. For example, the communication range of the first voice communication channel is a circular area with a radius of 50m, while the communication range of the second voice communication channel is a circular area with a radius of 500m.

The current base station communicates with walkie-talkie devices and other base stations via the first and second voice communication channels, respectively. It receives network access requests from nearby walkie-talkie devices during the contention time slot and responds to these requests to construct the network topology. Each base station and its surrounding walkie-talkie devices form a mesh topology, while the base stations themselves form a chain topology, creating a flexible network structure. Both base stations and walkie-talkies can move freely. When a walkie-talkie changes location, it only needs to roam to another base station to reorganize the network, making networking flexible and convenient.

An embodiment of the walkie-talkie communication method based on base station relay in this application involves transmitting a time frame to a network node within the first communication range via a first voice communication channel to broadcast the network node corresponding to each voice time slot in the time frame through the synchronization time slot of the time frame; receiving the time frames transmitted by the network node within the first communication range via the first voice communication channel and the time frames transmitted by other base stations within the second communication range via the second voice communication channel; obtaining the voice information transmitted by network nodes and other base stations through the voice time slots of the received time frames, and then, transmitting the received voice information to other base stations via the second voice communication channel with a larger communication range, and broadcasting the voice information to other base stations. By using time-division multiplexing, at least two groups of walkie-talkies or base stations within the network can speak simultaneously in the same time period, achieving duplex communication within the first and second communication ranges.

Meanwhile, the network topology in this application forms a mesh topology consisting of one base station and multiple walkie-talkies. Different base stations communicate via the second voice communication channel, enabling low-latency communication without the need for sequential transmission through multiple network nodes, even over long distances.

In some embodiments of this application, before step S101, which involves transmitting a time frame to the network node within the first communication range via the first voice communication channel, the following steps are included:

Step A1: the time frame transmitted by the network node within the first communication range is received via the first voice communication channel, and network entry requests or roaming requests transmitted by the network node are received through the contention time slot in the received time frame.

Step A2: the network topology is adjusted based on the network entry request or roaming request.

Specifically, as shown in FIG. 5, a new network node sends a network entry request to the base station via the contention time slot. The base station processes the network entry request through the contention time slot, provides feedback, and broadcasts the feedback result to the network node within the first communication range via the synchronization time slot. If the new network node receives the feedback result, it confirms network entry. If not, it resubmits the network entry request after a certain time interval. This approach ensures orderly processing of network entry requests from new nodes, improving efficiency and success rates.

The network node continuously scans the network signal quality. When the signaling delivered in the synchronization time slot indicates the network is in a silent state, the network node enters the reserved scanning time slot. During this time, it scans the signal quality of other base stations and compares it with the current base station's signal to initiate a roaming handover request.

Similarly, when a network node needs to roam from the current base station to a target base station, the network node sends a roaming request to the target base station through the contention time slot. The target base station processes the roaming request via the contention time slot, provides feedback, and broadcasts the feedback result to the network node within the first communication range and the current base station within the second communication range through the synchronization time slot. If the network node receives the feedback result, it confirms a successful roaming. If no feedback is received, the network node resends the roaming request after a certain time interval.

After a successful network entry request or roaming request, the base station broadcasts the processing result to other base stations and network nodes via the synchronization time slot, thereby updating the network topology in real time.

In the embodiments of this application, the network entry request or roaming request from a network node is received before transmitting the time frame, and the network topology is adjusted accordingly. This enables the network to dynamically adapt to node additions or movements, improving flexibility and adaptability.

In some embodiments of this application, before step S101, which involves transmitting the time frame to network node within the first communication range via the first voice communication channel, the following steps are included:

Step B1: the time frame transmitted by network node within the first communication range is transmitted via the first voice communication channel, and a voice initiation request from the network node is received through the contention time slot in the received time frame.

Step B2: a corresponding network node is allocated to each voice time slot in the time frame based on the received voice initiation request.

In one example, there are 5 voice time slots, meaning the base station can simultaneously allow 5 devices to speak. The actual number of devices connected to the base station can far exceed 5, with many remaining silent. When a walkie-talkie device intends to start speaking, it first sends a voice initiation request to the base station in the contention time slot to apply for speaking rights.

Upon receiving the voice initiation request from the walkie-talkie device, the base station allocates voice time slots to the device and broadcasts this allocation in the synchronization time slot. The walkie-talkie device confirms its allocated voice time slot from the synchronization time slot and broadcasts its voice in that slot.

Specifically, the embodiment of this application employs a random backoff algorithm in the design of the contention time slot.

The contention time slot is a common signaling channel used by all walkie-talkie devices under the current base station, with all devices competing for access. When multiple devices send contention signals simultaneously, leading to collisions, the random backoff algorithm is used for retransmission.

The steps of the random backoff algorithm are as follows:
Step 1: the walkie-talkie device sends a signal in the contention time slot.
Step 2: in the synchronization time slot of the next frame cycle, the walkie-talkie device checks whether the base station has received its contention signal.
Step 3: if the synchronization signal indicates that the base station has received its contention signal, the transmission is successful.
Step 4: if the synchronization signal does not show that its signal has been processed, the device randomly waits for N frame cycles and repeats Step 2.

By receiving a voice initiation request from network nodes and allocating corresponding voice time slots, this method effectively manages voice communication resources and ensures orderly communication.

In some embodiments of this application, Step S103, broadcasting the received voice information to the network node within the first communication range via the first voice communication channel and to other base stations within the second communication range via the second voice communication channel, includes the following steps:
Step S1031: the received voice information from each network node and other base stations is allocated to the corresponding each voice time slot.
Step S1032: the time frame is transmitted to the network node within the first communication range via the first voice communication channel, and the received voice information is transmitted to the network node within the first communication range through the corresponding voice time slots in the time frame.
Step S1033: the time frame is transmitted to other base stations within the second communication range via the second voice communication channel, and the received voice information is transmitted to other base stations within the second communication range through the corresponding voice time slots in the time frame.

In one example, after the current base station allocates voice time slots to each network node and other base stations, it continuously broadcasts voice to the network node within the first communication range. This enables voice communication with each network node through a mesh network topology, with each network node receiving the voice and forming the first voice communication channel.

Meanwhile, the current base station continuously broadcasts voice to other base stations within the second communication range, enabling voice communication with each chain-like network topology and base station. Each base station receives the voice, forming a second voice communication channel.

In the embodiments of this application, the received voice information is allocated to corresponding voice time slots and broadcast to network nodes and base stations within the first and second communication ranges. This method improves the accuracy and efficiency of voice information transmission, ensuring timely delivery of information.

The embodiments of this application also propose a walkie-talkie communication method based on base station relay, applied to a walkie-talkie, which includes a second short-range communication module and a second main control module.

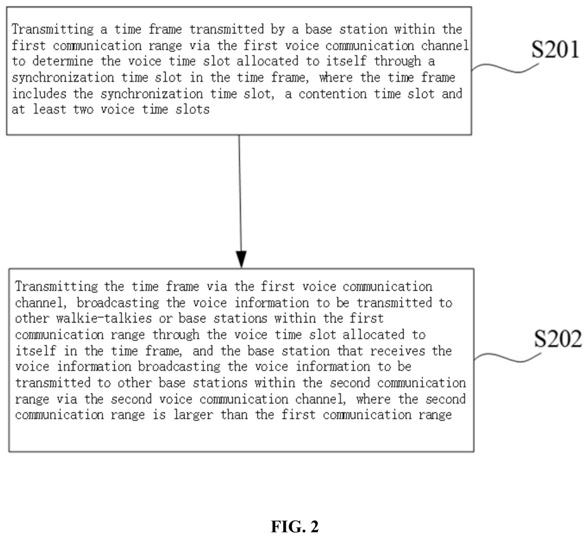

As shown in FIG. 2, the walkie-talkie communication method based on base station relay includes the following steps:
Step S201: a time frame transmitted by a base station within the first communication range is transmitted via the first voice communication channel to determine the voice time slot allocated to itself through a synchronization time slot in the time frame, where the time frame includes the synchronization time slot, a contention time slot and at least two voice time slots.
Step S202: the time frame is transmitted via the first voice communication channel, the voice information to be transmitted is broadcast to other walkie-talkies or base stations within the first communication range through the voice time slot allocated to itself in the time frame, and the base station that receives the voice information broadcasts the voice information to be transmitted to other base stations within the second communication range via the second voice communication channel, where the second communication range is larger than the first communication range.

In the embodiments of this application, the walkie-talkie determines its own voice time slot by receiving the time frame transmitted by the base station and broadcasts voice information in that time slot. This method enables the walkie-talkie to access the communication network in an orderly manner and expands the communication range using the relay function of the base station.

In some embodiments of this application, before Step S201, which involves receiving the time frame transmitted by the base station within the first communication range via the first voice communication channel, the following steps are included:
Step C1: the network signal qualities of the currently connected base station and other base stations are scanned, and the network signal quality of the currently connected base station is compared with those of other base stations.
Step C2: when there exists a base station with a better network signal quality than the currently connected base station, the time frame is transmitted to the base station with superior network signal quality via the first voice communication channel, and a network entry request or roaming request is transmitted through the contention time slot in the time frame.

Before receiving the time frame, the walkie-talkie scans and compares the signal quality of different base stations and sends a network entry request or roaming request when a better signal quality is detected. This helps the walkie-talkie select the optimal communication base station and improves communication quality.

In some embodiments of this application, before Step S201, which involves receiving the time frame transmitted by the base station within the first communication range via the first voice communication channel, the following steps are included:
Step D1: a time frame is transmitted to the base station within the first communication range via the first voice communication channel, and a voice initiation request is transmitted through the contention time slot in the time frame.
Step D1: the time frame returned by the base station in response to the voice initiation request is received, and whether the voice initiation request was successfully sent is confirmed based on the synchronization time slot in the time frame returned by the base station.
Step D1: if the voice initiation request was not successfully transmitted, after randomly waiting for several frame cycles, then the time frame is retransmitted to the base station within the first communication range via the first voice communication channel, and the voice initiation request is retransmitted through the contention time slot in the time frame.

In this embodiment, a random backoff algorithm is used to receive voice initiation request from network nodes and allocate corresponding network nodes to voice time slots, enabling effective management of voice communication resources and ensuring orderly communication.

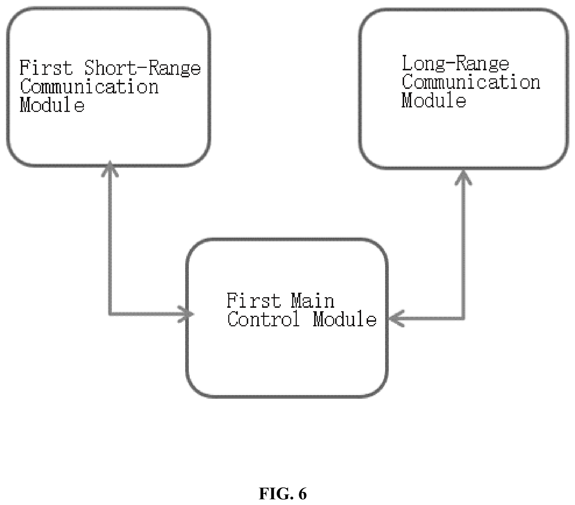

The embodiment of this application also proposes a base station, as shown in FIG. 6, which includes:
a first short-range communication module for communicating with a network node within the first communication range via the first voice communication channel, where each walkie-talkie serves as a network node;
a long-range communication module for communicating with other base stations within the second communication range via the second voice communication channel, where the second communication range is larger than the first communication range; and
a first main control module for controlling the first short-range communication module and the long-range communication module to execute the walkie-talkie communication method based on base station relay applied to the base station in the aforementioned embodiment.

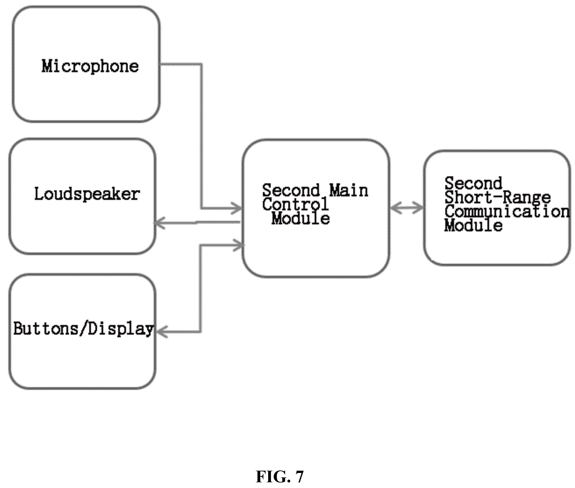

The embodiment of this application also proposes a walkie-talkie, as shown in FIG. 7, which includes:
a second short-range communication module for communicating with the base station within the first communication range via the first voice communication channel; and
a second main control module for controlling the second short-range communication module to execute the walkie-talkie communication method based on base station relay applied to the walkie-talkie in the aforementioned embodiment.

It should be understood that the walkie-talkie also includes UI units such as a microphone, speaker, buttons, and display screen to facilitate interaction with the user.

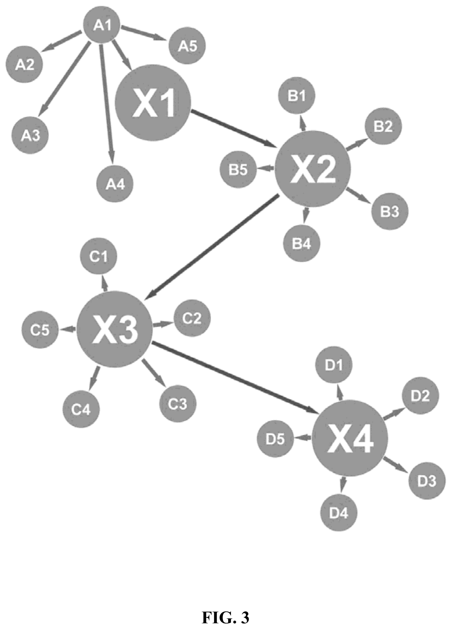

In one example, as shown in FIG. 3, the communication process between each base station and walkie-talkie in the embodiment of this application is as follows:
Step S1: base stations X1/X2/X3/X4, etc., continuously broadcast voice to walkie-talkie devices within the first communication range via the first short-range communication module to establish voice communication with each device. Each device receives the voice, forming the first voice communication channel.
Step S2: simultaneously, base station X1 continuously broadcasts voice to other base stations X2/X3/X4 within the second communication range via the long-range communication module to establish voice communication with other base stations. Each base station receives the voice, forming the second voice communication channel.
Step S3: walkie-talkie A1 continuously broadcasts voice to nearby walkie-talkies and base stations within the first communication range via the second short-range communication module to establish voice communication with nearby base stations and walkie-talkies. Each walkie-talkie or base station receives the voice, forming a voice communication channel.
Step S4: after receiving the voice from walkie-talkie A1, the nearby base station X1 broadcasts the voice to other base stations via the long-distance communication module's transmission time slot, enabling voice communication with each base station. The voice travels from walkie-talkie A1 to nearby base station X1, then to each base station X2/X3/X4, completing the voice communication.
Step S5: walkie-talkies near each base station repeat steps S3 and S4 to complete voice communication.
Step S6: a walkie-talkie such as A1 near one base station can freely move to the approach any other base station, quickly connect to the base station, and execute steps S1-S5.
Step S7: each base station such as X1 can freely move and cross within the effective range, achieving seamless connection with nearby devices post-movement and executing steps S1-S5.
Step S8: each base station such as X1 and all devices can move freely. After position changes, the network discovers and rapidly repairs the network through the network topology, forming a new network topology map.

In this application, the network topology establishes the first voice communication channel between each base station and surrounding walkie-talkies for intercom communication, while simultaneously creating a second voice communication channel for intercom transmission between base stations, forming a base station cluster. Base stations can switch between the first and second voice communication channels, enabling intercom communication between distant base stations and between base stations and walkie-talkies. All walkie-talkies can communicate with nearby base stations and, upon moving to any base station, continue intercom communication with nearby base stations. The intercom communication between walkie-talkies and base stations can also transmit voice to other base stations after mixing, which then relay the voice to walkie-talkies near those base stations, achieving full-duplex intercom communication across the entire large network.

Additionally, the network topology in this application forms a mesh structure comprising one base station and multiple walkie-talkies. Communication between different base stations occurs via the second voice communication channel, eliminating the need for sequential transmission through multiple network nodes even over long distances. This enables low-latency communication and avoids voice information distortion caused by multiple relays.

Furthermore, the walkie-talkies in this application can automatically send network entry requests or roaming requests in real-time via contention time slots within the time frame, flexibly adjusting the connected base station. Each base station thereby updates the connected network nodes and network topology. Both base stations and walkie-talkies can move freely within the effective range, automatically completing and adjusting the network topology repair while maintaining continuous communication.

The embodiments of this application also provide a computer-readable storage medium. The method according to the embodiments of this application may be implemented in hardware or firmware, or realized as computer code that can be recorded on a storage medium, or downloaded over a network as originally stored in a remote storage medium or a non-transitory machine-readable storage medium and subsequently stored in a local storage medium. Thus, the method described herein can be stored in such software processed on a storage medium used by a general-purpose computer, a special-purpose processor, or programmable or dedicated hardware. The storage medium may include magnetic disks, optical discs, read-only memory (ROM), random-access memory (RAM), flash memory, hard disks, or solid-state drives (SSDs). Furthermore, the storage medium may also comprise combinations of the aforementioned types of storage devices. It is understood that computers, processors, microprocessor controllers, or programmable hardware include storage components capable of storing or receiving software or computer code, which, when accessed and executed by the computer, processor, or hardware, implements the method illustrated in the aforementioned embodiments.

Part of this application may be applied as a computer program product, such as computer program instructions, which, when executed by a computer, can invoke or provide the methods and/or technical solutions according to this application through the operation of the computer. Those skilled in the art should understand that the forms of computer program instructions in a computer-readable medium include but are not limited to source files, executable files, installation package files, etc. Accordingly, the ways in which computer program instructions are executed by a computer include but are not limited to: the computer directly executing the instructions, or the computer compiling the instructions and then executing the corresponding compiled program, or the computer reading and executing the instructions, or the computer reading and installing the instructions and then executing the corresponding installed program. Here, the computer-readable medium may be any available computer-readable storage medium or communication medium accessible to the computer.

Although the embodiments of the present application have been described in conjunction with the accompanying drawings, those skilled in the art can make various modifications and variations without departing from the spirit and scope of the present application. Such modifications and variations shall fall within the scope defined by the appended claims.

## Claims

1. A walkie-talkie communication method based on base station relay, applied to a base station, **characterized in that**, comprising the following steps of:
transmitting a time frame to a network node within a first communication range via a first voice communication channel to broadcast the network node corresponding to each voice time slot in the time frame through a synchronization time slot of the time frame, wherein the time frame comprises the synchronization time slot, a contention time slot and at least two voice time slots, with each walkie-talkie serving as a network node;
receiving the time frame transmitted by the network node within the first communication range via the first voice communication channel, receiving the time frame transmitted by other base stations within a second communication range via a second voice communication channel, and acquiring voice information transmitted by the network node and other base stations through the voice time slots of the received time frame; and
broadcasting the received voice information to the network node within the first communication range via the first voice communication channel, and broadcasting the received voice information to other base stations within the second communication range via the second voice communication channel, wherein the second communication range is larger than the first communication range.

2. The walkie-talkie communication method based on base station relay according to claim 1, **characterized in that** before the step of transmitting a time frame to a network node within a first communication range via a first voice communication channel, the method comprises:
receiving the time frame transmitted by network node within the first communication range via the first voice communication channel, and receiving a network entry request or a roaming request transmitted by the network node through the contention time slot of the received time frame; and
adjusting a network topology based on the network entry request or the roaming request.

3. The walkie-talkie communication method based on base station relay according to claim 1, **characterized in that** before the step of transmitting a time frame to a network node within a first communication range via a first voice communication channel, the method comprises:
receiving the time frame transmitted by the network node within the first communication range via the first voice communication channel, and receiving a voice initiation request transmitted by the network node through the contention time slot of the received time frame; and
allocating a corresponding network node to each voice time slot in the time frame based on the received voice initiation request.

4. The walkie-talkie communication method based on base station relay according to claim 1, **characterized in that** the steps of receiving the time frame transmitted by the network node within the first communication range via the first voice communication channel, and receiving the time frame transmitted by other base stations within a second communication range via a second voice communication channel comprise:
respectively allocating the received voice information from each network node and other base stations to corresponding voice time slots;
transmitting the time frame to the network node within the first communication range via the first voice communication channel, and transmitting the received voice information to the network node within the first communication range through the corresponding voice time slots in the time frame; and
transmitting the time frame to other base stations within the second communication range via the second voice communication channel, and transmitting the received voice information to other base stations within the second communication range through the corresponding voice time slots in the time frame.

5. A walkie-talkie communication method based on base station relay, applied to a walkie-talkie, **characterized in that**, comprising the following steps of:
receiving a time frame transmitted by base stations within a first communication range via a first voice communication channel, to determine voice time slots allocated to itself through a synchronization time slot in the time frame, wherein the time frame comprises the synchronization time slot, a contention time slot and at least two voice time slots; and
transmitting the time frame via the first voice communication channel, broadcasting voice information to be transmitted to other walkie-talkies or base stations within the first communication range through the voice time slots allocated to itself in the time frame, and broadcasting the voice information to be transmitted to other base stations within a second communication range via a second voice communication channel through a base station that receives the voice information, wherein the second communication range is larger than the first communication range.

6. The walkie-talkie communication method based on base station relay according to claim 5, **characterized in that** before the step of receiving a time frame transmitted by base stations within a first communication range via a first voice communication channel, the method comprises:
scanning a network signal quality of a currently connected base station and network signal qualities of other base stations, and comparing the network signal quality of the currently connected base station with those of other base stations; and
when there exists a base station with a better network signal quality than the currently connected base station, transmitting the time frame to the base station with a better network signal quality via the first voice communication channel, and transmitting a network entry request or roaming request through the contention time slot in the time frame.

7. The walkie-talkie communication method based on base station relay according to claim 5, **characterized in that** before the step of receiving a time frame transmitted by base stations within a first communication range via a first voice communication channel, the method comprises:
transmitting the time frame to a base station within the first communication range via the first voice communication channel, and transmitting a voice initiation request through the contention time slot in the time frame;
receiving the time frame returned by the base station in response to the voice initiation request, and confirming whether the voice initiation request was successfully sent based on the synchronization time slot in the time frame returned by the base station; and
if the voice initiation request is not successfully transmitted, randomly waiting for several frame periods, then retransmitting the time frame to the base station within the first communication range via the first voice communication channel, and retransmitting the voice initiation request through the contention time slot in the time frame.

8. A base station, **characterized in that**, comprising:
a first short-range communication module for communicating with a network node within a first communication range via a first voice communication channel, wherein each walkie-talkie serves as a network node;
a long-range communication module for communicating with other base stations within a second communication range via a second voice communication channel, wherein the second communication range is larger than the first communication range; and
a first main control module for controlling the first short-range communication module and the long-range communication module to execute the walkie-talkie communication method based on base station relay according to any one of claims 1 to 4.

9. A walkie-talkie, **characterized in that**, comprising:
a second short-range communication module for communicating with a base station within a first communication range via a first voice communication channel; and
a second main control module for controlling the second short-range communication module to execute the walkie-talkie communication method based on base station relay according to any one of claims 5 to 7.

10. A computer-readable storage medium, **characterized in that** the computer-readable storage medium stores computer instructions, which are used to cause a computer to execute the walkie-talkie communication method based on base station relay according to any one of claims 1 to 7.
